# EUROPEAN PATENT APPLICATION

(11) **EP 1 056 149 A2**
(43) Date of publication of application: **29.11.2000**
(21) Application number: 00111274.7
(22) Date of filing: 25.05.2000
(51) Int. Cl.: H01M 8/10, H01M 8/08

(54) **Fuel cell power generation system**

(30) Priority: 27.05.1999 JP 14836599; 30.09.1999 JP 27913699
(71) Applicant: HONDA GIKEN KOGYO KABUSHIKI KAISHA, Minato-ku, Tokyo (JP)
(72) Inventor: Moriya, Takashi, Wako-shi, Saitama-ken (JP); Daimaru, Akimasa, Wako-shi, Saitama-ken (JP); Watanabe, Naoya, Wako-shi, Saitama-ken (JP); Komura, Takashi, Wako-shi, Saitama-ken (JP)
(74) Representative: Böhm, Brigitte, Dipl.-Chem. Dr.

(57) **Abstract**

A fuel cell power generation system is arranged so that it supplies pure hydrogen discharged from a hydrogen reservoir without humidifying it to a fuel cell equipped with a heat resistant polymer membrane containing phosphoric acid which functions as a medium for conducting protons, and the fuel cell is operated by setting the upper limit of its operating temperature at 200°C. This fuel cell power generation system is suitable for use in automobiles.

## Description

### BACKGROUND OF THE INVENTION

### FIELD OF THE INVENTION

The present invention relates to a fuel cell power generation system and, in particular, to such system which is suitable for use in automobiles.

### DESCRIPTION OF THE PRIOR ART

With regard to fuel cell power generation systems of this type in the art, those which have a fuel cell equipped with a solid polymer electrolyte membrane showing proton conductivity in a wet state and which are operated by setting the upper limit of the operating temperature of the aforementioned fuel cell at 100°C are known.

However, in the systems in the art, in order to prevent thermal damage to the solid polymer electrolyte membrane caused by an increase in temperature due to the electrode reaction, a cooling means using a refrigerant is provided inside the fuel cell and thus the operating temperature of the fuel cell is strictly controlled so as not to exceed 100°C and, moreover, in order to maintain the solid polymer electrolyte membrane in a wet state, a humidifier is provided so as to strictly control the water content by humidifying the hydrogen fuel and air. In addition to this strict control of the operating temperature and the water content, the structure is complicated and heavy and thus there are many problems that need to be solved in order for the systems to be used in automobiles.

### SUMMARY OF THE INVENTION

It is an object of the present invention to provide a fuel cell power generation system which is suitable for use in automobiles by relaxing the control of the operating temperature of the fuel cell and the water content and by simplifying the structure as well as reducing the weight.

In accordance with the present invention in order to achieve the aforementioned object, a fuel cell power generation system is provided wherein pure hydrogen discharged from a hydrogen reservoir is supplied, without being humidified, to a fuel cell equipped with a heat resistant polymer membrane containing phosphoric acid, which functions as a medium for conducting protons, and the aforementioned fuel cell is operated by setting the upper limit of the operating temperature thereof at 200°C.

The operating temperature of the fuel cell is restricted by the heat resistance and the water retention ability of the polymer membrane containing phosphoric acid. As mentioned above, the upper limit of the operating temperature of the fuel cell is set as high as 200°C, and this is because the polymer membrane containing phosphoric acid has a high heat resistance and can sufficiently withstand increases in temperature due to the electrode reaction and has the ability to retain water. As a result, control of the operating temperature can be relaxed and it becomes possible to achieve a simplification of the cooling means. Moreover, since a large difference in temperature can be set between the refrigerant (e.g., a cooling liquid) and the object that is to be cooled, the size of the radiator, etc. can be reduced.

Further, as the phosphoric acid, that having a high concentration and a high boiling point, for example, having a concentration of 85% or more, is used, and the phosphoric acid is retained in the polymer membrane together with water even during the above-mentioned temperature increase and functions as a medium for conducting protons. It is therefore unnecessary to provide a humidifier, humidify the hydrogen fuel or carry out strict control of the water content by the humidification as mentioned above.

In such a fuel cell power generation system, control of the operating temperature of the fuel cell and the water content is relaxed, the structure is simplified and the weight is reduced and, therefore, it is suitable for use in automobiles.

The above-mentioned object, other objects, characteristics and advantages of the present invention will be clarified by a description of a preferred embodiment which is described in detail below by reference to the attached drawings.

### BRIEF DESCRIPTION OF THE DRAWINGS

Fig. 1 is a block diagram of a fuel cell power generation system; and
Fig. 2 is a front view of the essential parts of the fuel cell.

### DESCRIPTION OF THE PREFERRED EMBODIMENT

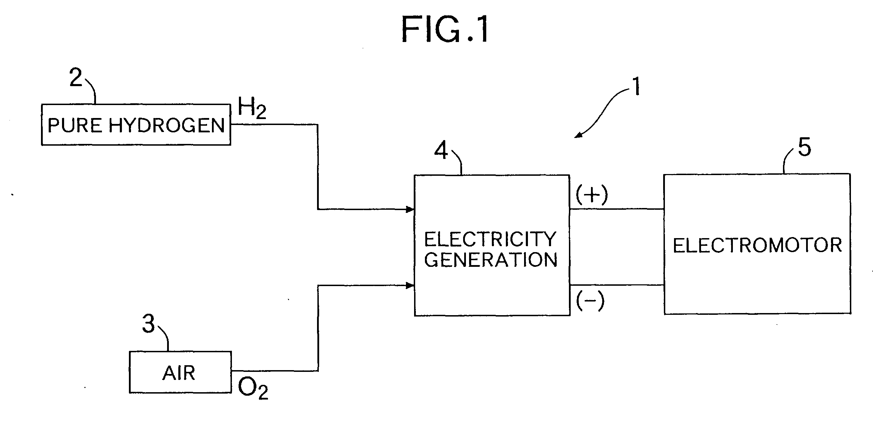

A fuel cell power generation system 1 shown in Fig. 1 is used in an automobile, and in the system 1, a hydrogen reservoir 2 and an air supply device 3 are connected to a fuel cell 4 and the (+) air electrode and the (-) fuel electrode on the output side thereof are individually connected to a direct current electromotor device 5. As the hydrogen reservoir 2, a tank having a built-in hydrogen storing material such as a hydrogen storage alloy or nanostructure carbon, a cylinder filled with liquid hydrogen, a cylinder filled with high pressure hydrogen, etc. can be used. There are no humidifiers between the hydrogen reservoir 2 and the fuel cell 4 or between the air supply device 3 and the fuel cell 4.

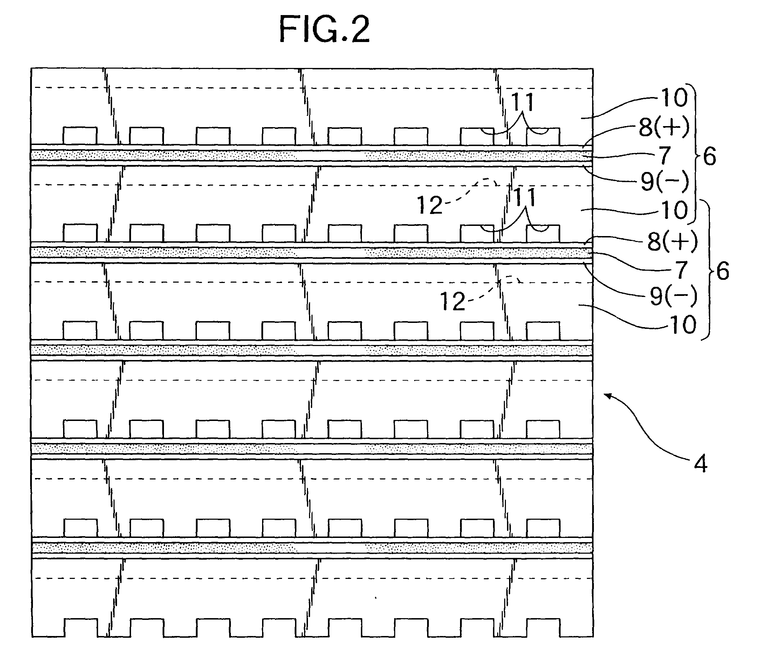

In Fig. 2 the fuel cell 4 has a plurality of cells 6, each cell 6 comprises a heat resistant polymer membrane 7 containing phosphoric acid which functions as a medium for conducting protons, a (+) air electrode 8 and a (-) fuel electrode 9 between which the membrane 7 is interposed, and a pair of separators 10 between which the two electrodes 8, 9 are interposed, and one separator 10 is shared by two adjacent ones of the cells 6. In each cell 6, air is supplied without being humidified to a plurality of channels 11 provided in the separator 10 on the side of the (+) air electrode 8, and pure hydrogen (fuel) is supplied without being humidified to a plurality of channels 12 which are provided in the separator 10 on the side of the (-) fuel electrode 9 and intersect the aforementioned channels 11.

Each of the (+) air electrodes 8 and the (-) fuel electrodes 9 are formed from carbon and a catalyst metal (e.g., Pt) respectively, and each separator 10 is formed from carbon, stainless steel (including that subjected to an anticorrosive treatment), etc.

The heat resistant polymer membrane 7 comprises a polymer having a heterocyclic structure containing at least nitrogen such as, for example, polybenzimidazole. Such heat resistant polymer membrane 7 is disclosed in the specification of US Patent No. 5,525,436, and various types of heat resistant polymer membrane disclosed therein can be used in the present invention.

The aforementioned heat resistant polymer membrane 7 can sufficiently withstand increases in temperature due to the electrode reaction. As the phosphoric acid, that having a high concentration and a high boiling point (e.g., that having a concentration of 85% or more) is used, and the phosphoric acid is retained in the polymer membrane 7 even during the above-mentioned temperature increase and functions as a medium for conducting protons. Such fuel cell 4 is suitably used in automobiles since a reduction in size and weight is achieved accompanying the simplification of the cooling means, and since it is possible to effectively use the generated heat by increasing the upper limit of the operating temperature to 200°C. When the operating temperature reaches 210°C, however, phosphoric acid decomposes to form phosphorus oxide. It is therefore preferable for the operating temperature to be in the range from 100°C to 200°C.

In the fuel cell power generation system 1 shown in Fig. 1, when pure hydrogen discharged from the hydrogen reservoir 2 is supplied to the fuel cell 4 without being humidified and air fed from the air supply device 3 is supplied to the fuel cell 4 without being humidified, the fuel cell 4 starts its operation so as to generate electricity. The direct current electricity generated by the above-mentioned electricity generation operation is sent to the direct current electromotor device 5.

A fuel cell power generation system is arranged so that it supplies pure hydrogen discharged from a hydrogen reservoir without humidifying it to a fuel cell equipped with a heat resistant polymer membrane containing phosphoric acid which functions as a medium for conducting protons, and the fuel cell is operated by setting the upper limit of its operating temperature at 200°C. This fuel cell power generation system is suitable for use in automobiles.

## Claims

1. A fuel cell power generation system, wherein pure hydrogen discharged from a hydrogen reservoir is supplied to a fuel cell equipped with a heat resistant polymer membrane containing phosphoric acid, which functions as a medium for conducting protons, without being humidified, and said fuel cell is operated by setting the upper limit of the operating temperature thereof at 200°C.

2. A fuel cell power generation system according to claim 1, wherein said heat resistant polymer membrane comprises a polymer having a heterocyclic structure containing at least nitrogen.

3. A fuel cell power generation system according to claim 2, wherein said polymer is polybenzimidazole.

4. A fuel cell power generation system according to claim 3, wherein the air is supplied to said fuel cell without being humidified.

5. A fuel cell power generation system according to claim 4, wherein phosphoric acid having a concentration of 85% or more is used as said phosphoric acid contained in said heat resistant polymer membrane.

6. A fuel cell power generation system according to claim 5. wherein said system is used in an automobile.
